# EUROPEAN PATENT APPLICATION

(11) **EP 0 911 215 A2**
(43) Date of publication of application: **28.04.1999**
(21) Application number: 98120035.5
(22) Date of filing: 22.10.1998
(51) Int. Cl.: B60Q 1/076

(54) **A control device for an actuator of a vehicle headlamp adjustment unit**

(30) Priority: 24.10.1997 IT TO970211 U
(71) Applicant: Sylea Italia S.r.l., 10129 Torino (IT)
(72) Inventor: Monti, Carlo, 15023 Felizzano (IT)
(74) Representative: Franzolin, Luigi

(57) **Abstract**

A control device (1) has first and second input terminals (2, 4) which can be connected in use to an electrical energy source (5), typically the battery of the vehicle, and an output terminal (6) providing a control signal for the actuator (7). The control device (1) includes resistive potential divider means (10) connected between the first and second input terminals (2, 4) and having a plurality of intermediate output taps (12, 14, 16, 18), and a switch (20) interposed between the intermediate output taps (12-18) and the output terminal (6).

## Description

The present invention relates to a control device for an actuator of a vehicle headlamp adjustment unit.

As is known, vehicle headlamp adjustment units essentially comprise an actuator, typically an electric motor, having an output member co-operating in use with ball joints mounted on the headlamps.

The actuator is typically controlled by an electronic device generating an output control signal as a voltage varying between a minimum value and a maximum value to move the output member of the actuator between two operating end positions corresponding to operating end positions of the vehicle headlamps.

The majority of known control devices mounted on vehicles generate the control signal by utilising resistive potential divider means of continuous type comprising a trimmer adjustable by means of a control wheel disposed typically on the instrument panel of the vehicle close to the driver's position.

The main disadvantage deriving from the use of resistive potential divider means of the above-described type consists in the limited availability of resistance values of trimmers which are currently commercially available, which causes a consequent limitation in the versatility and adaptability of such control devices to different types of actuators which can be mounted on vehicles. Moreover, currently commercially available trimmers have relatively high tolerances on the nominal resistance values, which causes a consequent lack of precision in the value of the control signal and therefore in the effective position of the headlamps corresponding to a given position of the adjusting control wheel.

The object of the present invention is the provision of a control device which has a greater versatility and adaptability to different types of actuators which can be mounted on vehicles, and a greater precision in the value of the control signal.

According to the present invention there is provided a control device for a motor vehicle headlamp adjuster actuator, the said control device having first and second input terminals which can be connected in use to a source of electrical energy, and an output terminal providing a control signal for the said actuator, the said control device including resistive potential divider means connected between the first and second input terminals, characterised in that the said resistive potential divider means have a plurality of intermediate output taps and in that it further comprises switch means interposed between the said intermediate output taps and the said output terminal.

For a better understanding of the present invention there is now described a preferred embodiment, purely by way of non-limitative example and with reference to the attached drawing, in which there is illustrated an electrical diagram of a control device formed according to the present invention.

In the attached drawing a control device generally indicated 1 has first and second input terminals 2, 4 which can be connected in use to a source 5 of electrical energy, typically the battery of the vehicle, and an output terminal 6 which can be connected in use to an input terminal of an actuator 7 of the vehicle's headlamp adjuster unit (not illustrated) and providing a control signal for the actuator 7 itself.

The control device 1 comprises resistive potential divider means 10 connected between the first and second input terminals 2, 4 and having four intermediate output taps 12, 14, 16, 18; a four-position switch 20 connected to the intermediate output taps 12-18; an output resistor 22 interposed between the switch 20 and the output terminal 6.

The resistive potential divider means 10 comprise first, second, third, fourth and fifth resistors 30, 32, 34, 36, 38 connected together in series between the first and second input terminals 2, 4 and having four intermediate nodes defining the said intermediate output taps 12-18.

Conveniently the resistors 30-38 and the output resistor 22 are of the SMD type and their resistance values are determined from time to time according to the type of actuator which the control device 1 must control, thus significantly increasing the versatility and adaptability of the control device 1 to the different types of actuators commercially available and therefore to the different types of vehicles on which it may be mounted.

The four-position switch has first, second, third and fourth terminals 40, 42, 44, 46 each connected to a respective intermediate output tap 20-28 of the resistive potential divider 10, and a fifth terminal 48 (common terminal) connected through the output resistor 22 to the output terminal 6.

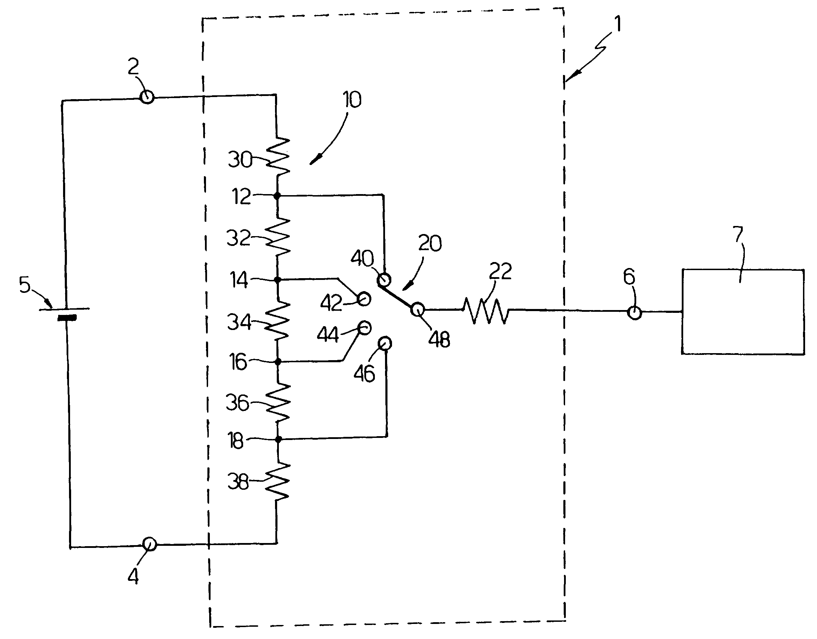

The operation of the control device 1 is easily deducible from the electric diagram of Figure 1. In fact, by means of the switch 20 the output terminal 6 is connectable to one of the intermediate output taps 20-28 of the resistive potential divider means 10 on which there are present four different voltage values. In this way the control voltage signal present on the output terminal 6 can assume four different values which, when supplied alternatively to the actuator 7 of the headlamp adjuster unit, makes it possible to cause the headlamps to assume four different operating positions.

From a study of the characteristics of the control device 1 according to the present invention the advantage which it offers are evident.

In particular, the control device 1 utilises dividing resistors of the SMD type available commercially in a wide variety of resistance values and therefore the present control device has a high versatility and adaptability to the different types of actuators which can be mounted on vehicles.

Moreover, resistors of the SMD type can be obtained commercially with decidedly low tolerances thus allowing an improvement in the precision of the value of the control signal and therefore in the effective position of the headlamps corresponding to a given position of the adjustment wheel.

Moreover, the use of the switch element 20 allows a snap movement of the adjustment wheel and therefore uniformity of the movements of the adjustment wheel itself between the four positions.

Finally, the present control device 1 has a lower production cost than the production costs of known control devices.

Finally, it is clear that the control device 1 described and illustrated here can have modifications and variations introduced thereto which do not depart from the ambit of protection of the claims.

For example, the number of resistors in the potential divider means 10 could be different from that described and, in particular, the resistive potential divider means 10 could include even only three resistors connected together in series for the production of only two intermediate output taps in such a way as to cause the actuator 7 and therefore the headlamps, to have only two operating positions.

## Claims

1. A control device for a headlamp adjuster unit of a vehicle, the said control device (1) having first and second input terminals (2, 4) which can be connected in use to a source (5) of electrical energy, and an output terminal (6) providing a control signal for the said actuator (7), the said control device (1) including resistive potential divider means (10) connected between the first and second input terminals (2, 4), characterised in that the said resistive potential divider means (10) have a plurality of intermediate output taps (12, 14, 16, 18), and in that it further includes switch means (20) interposed between the said intermediate output taps (12-18) and the said output terminal (6).

2. A control device according to Claim 1, characterised in that the said resistive divider means (10) comprise a plurality of divider resistors (30, 32, 34, 36, 38) connected together in series and having a plurality of intermediate nodes defining the said intermediate output taps (12-18).

3. A control device according to Claim 1 or Claim 2, characterised in that the said switch means (20) have a plurality of first terminals (40, 42, 44, 46) each connected to a respective intermediate output tap (20-28) of the said resistor potential divider means (10) and a second terminal (48) connected to the said output terminal (6).

4. A control device according to Claim 2 or Claim 3, characterised in that the said resistive potential divider means (10) comprise five said divider resistors (30, 32, 34, 36, 38) defining four intermediate output taps (12-18).

5. A control device according to any preceding claim, characterised in that it further comprises an output resistor (22) interposed between the said switch means (20) and the said output terminal (6).

6. A control device according to Claim 2, characterised in that the said divider resistors (30-38) are of SMD type.

7. A control device according to Claim 5, characterised in that the said output resistor (22) is of SMD type.
